(19) **Europäisches Patentamt**

**European Patent Office**

**Office européen des brevets**

(11) **EP 0 896 853 B1**

(12) **FASCICULE DE BREVET EUROPEEN**

(45) Date de publication et mention
de la délivrance du brevet:
**29.10.2003 Bulletin 2003/44**

(51) Int Cl.$^7$: **B23K 35/40**, B23K 9/073,
B23K 9/167, B23K 31/02

(21) Numéro de dépôt: **98401886.1**

(22) Date de dépôt: **24.07.1998**

(54) **Procédé et dispositif de fabrication de tubes métalliques soudés**

Verfahren und Vorrichtung zum Herstellen von geschweisste Metallrohren

Process and apparatus for manufacturing welded metal pipes

(84) Etats contractants désignés:
**AT BE CH DE DK ES FI FR GB IE IT LI LU NL PT SE**

(30) Priorité: **25.07.1997 FR 9709512**

(43) Date de publication de la demande:
**17.02.1999 Bulletin 1999/07**

(73) Titulaire: **LA SOUDURE AUTOGENE FRANCAISE
F-75007 Paris (FR)**

(72) Inventeurs:
• **Bonnet, Christian
95420 Saint-Gervais (FR)**
• **Astier, Denis
95300 Ennery (FR)**

(74) Mandataire: **Pittis, Olivier
L'Air Liquide, S.A.,
Direction de la Propriété Intellectuelle,
75, Quai d'Orsay
75321 Paris Cedex 07 (FR)**

(56) Documents cités:
FR-A- 1 408 975        GB-A- 876 352
GB-A- 2 080 158        US-A- 3 349 213

• **PATENT ABSTRACTS OF JAPAN vol. 008, no.
234 (M-334), 26 octobre 1984 & JP 59 113996 A
(KOBE SEIKOSHO KK), 30 juin 1984**

**Description**

L'invention se rapporte à un procédé et à un dispositif de fabrication de tubes métalliques soudés, lesdits tubes étant susceptibles de contenir un ou plusieurs éléments de remplissage, tels des poudres, des granulés ou leurs mélanges. Après soudage, les tubes obtenus peuvent être subséquemment laminés, tréfilés et/ou subir une cuisson intermédiaire, de sortes de leur conférer une forme compatible avec l'utilisation à laquelle ils sont destinés. Le procédé et le dispositif de l'invention peuvent être utilisés, notamment, pour fabriquer des fils fourrés destinés au soudage à l'arc électrique.

Habituellement, pour fabriquer un tube métallique, de manière industrielle et continue, on utilise une feuille métallique ou feuillard dont la largeur et l'épaisseur sont adaptés au tube que l'on veut produire, c'est-à-dire compatibles avec l'utilisation ultérieure dudit tube.

Pour ce faire, la feuille métallique ou feuillard est placée sur un dispositif permettant d'animer ladite feuille métallique d'une vitesse de déplacement non nulle selon son axe longitudinal. Durant son déplacement, une succession de galets confère à ce feuillard, d'abord, une forme sensiblement en "U", puis une forme sensiblement en "O", par rapprochement des deux bords longitudinaux dudit feuillard, l'un vers l'autre, lesdits deux bords longitudinaux étant sensiblement rectilignes et parallèles l'un à l'autre.

Lorsque le tube doit contenir des éléments de remplissage tels des poudres, des granulés ou leurs mélanges, ceux-ci sont introduits à l'intérieur du tube, lorsque celui-ci est en forme de "U".

L'introduction des éléments de remplissage est réalisée au moyen d'un tapis sur lequel sont disposés les éléments de remplissage et lequel se déroule en synchronisme avec l'avance du feuillard, de sorte que les éléments de remplissage soient déversés, en continu, par le tapis à l'intérieur de la gouttière que forme le tube en "U". On ajuste la quantité d'éléments de remplissage déversée par le tapis, par réglage de la hauteur desdits éléments de remplissage sur ledit tapis.

Ensuite, comme précédemment, une nouvelle succession de galets permet de conférer au tube sa forme en "O", c'est-à-dire sa forme sensiblement cylindrique.

La réunion des deux bords longitudinaux du feuillard, lesquels se trouvent en regard l'un de l'autre, est généralement réalisée par soudage desdits bords l'un avec l'autre.

Actuellement, au moins deux procédés de soudage sont utilisés industriellement, à savoir le procédé de soudage par haute fréquence et le procédé TIG multicathodes.

Toutefois, ceux-ci présentent chacun un certain nombre d'inconvénients.

Ainsi, lorsque l'on met en oeuvre un procédé de soudage haute fréquence pour souder les bords longitudinaux d'un tube contenant des poudres non totalement amagnétiques, celles-ci sont "aspirées" sous l'effet du champ magnétique très intense créé par le courant de soudage haute fréquence et viennent alors contaminer la soudure, de sorte d'y provoquer des défauts engendrant une plus grande fragilité du joint soudé, lequel ne peut plus, dès lors, supporter sans rupture des transformations ultérieures, telles des étapes de tréfilages et/ou de laminage subséquentes.

Les documents EP-A-0158691, EP-A-0158693, EP-A-0589470, US-A-4,584,169, US-A-4,632,882 et US-A-5,192,016 ont déjà souligné ce problème et tentés d'apporter des solutions. Toutefois, aucune de ces solutions n'est réellement satisfaisante du point de vue industriel, car celles-ci imposent, notamment, de fortes contraintes quant aux poudres de remplissage à utiliser ou nécessitent des investissements très coûteux et très peu rentables.

Une alternative réside dans le procédé de soudage TIG multicathodes, lequel est utilisé pour la fabrication de tubes en matériau non ferromagnétique, tels les aciers inoxydables austénitiques ou les alliages cuivreux.

En général, cette technique met en oeuvre trois électrodes alignées dans le sens du déplacement du tube et distantes l'une de l'autre d'une valeur constante que l'on cherche à réduire au minimum, mais qui dépend de l'encombrement des différents organes constitutifs, des impératifs d'isolement électrique des électrodes et de refroidissement de l'ensemble.

Les vitesses de soudage en soudage TIG multicathodes sont, notamment, fonction de l'épaisseur du joint de soudure et de la nature du matériau, donc de la diffusivité thermique. Cependant, à géométrie similaire, lorsque les deux procédés peuvent être utilisés, le soudage haute fréquence peut être effectué à des vitesses très supérieures à celle du soudage TIG multicathodes.

En effet, en soudage haute fréquence, l'énergie est générée sur toute l'épaisseur des bords à souder l'un avec l'autre, alors qu'en soudage TIG multicathodes, l'énergie des arcs n'est transmise qu'à la surface des bords et doit ensuite diffuser selon l'épaisseur, de sorte que la face inférieure soit portée à une température supérieure à la température de fusion du matériau considéré.

En d'autres termes, le procédé TIG multicathodes conduit à une productivité très inférieure à celle du soudage haute fréquence en pénalisant, par là même, son intérêt industriel.

En outre, le procédé TIG multicathodes présente un inconvénient majeur à savoir le phénomène de "soufflage magnétique", lequel se traduit par des interactions non maîtrisables des arcs électriques entre eux, lesquelles interactions obligent à limiter les intensités de courant mises en oeuvre dans chacune des électrodes et donc, en final, à réduire considérablement les vitesses de soudage.

En effet, la pénétration d'une soudure, c'est-à-dire l'épaisseur de feuillard pouvant entrer en fusion de sorte de souder les deux bords l'un à l'autre, dépend notamment de l'intensité du courant mis en oeuvre dans le procédé TIG multicathodes et de la vitesse de soudage.

Toute chose étant égales par ailleurs, la pénétration d'une soudure est une fonction de l'énergie de soudage (E) qui peut s'exprimer par la formule I suivante:

$$E = \sum_{i=1}^{n} \frac{Ui.\ Ii}{Vs} \qquad (I)$$

dans laquelle:

- Ui est la tension (en volt) de soudage de la cathode i;
- Ii est l'intensité (en ampère) du courant parcourant la cathode i;
- Vs est la vitesse de soudage (en cm.S$^{-1}$);
- et n est le nombre (n $\geq$ 1) de cathode(s) i utilisée(s).

L'énergie de soudage E s'exprime alors en J.cm$^{-1}$.

De là, on comprend que si l'on veut augmenter la vitesse de soudage tout en conservant la même pénétration, il est nécessaire d'augmenter l'énergie de soudage, c'est-à-dire la puissance délivrée par le ou les générateurs en augmentant l'intensité et/ou la tension sur l'une ou plusieurs des cathodes.

Cependant, en pratique, il est difficile de tirer parti de manière significative d'une augmentation de tension car, en procédé de soudage TIG multicathodes, la tension est une fonction croissante de la hauteur d'arc.

Or, une grande hauteur d'arc n'est pas favorable au soudage à grande vitesse. En effet, une grande hauteur d'arc engendre une diminution de la densité de puissance de l'arc à la surface de la pièce à souder, ce qui a pour effet, toute chose étant égale par ailleurs, d'élargir le cordon de soudure et donc de diminuer la pénétration, ce qui va à l'encontre de l'objectif recherché.

En outre, un arc plus long est d'une part, plus sensible aux interactions magnétiques engendrant une déflexion de celui-ci et, d'autre part, a tendance à s'accrocher plus facilement et pendant un temps plus long au point chaud, c'est-à-dire au métal en fusion, d'où il résulte d'abord un allongement et un infléchissement de l'arc, puis un décrochage brutal de celui-ci lorsque la tache anodique, c'est-à-dire la racine de l'arc, vient se repositionner à la verticale de la cathode. On obtient alors une soudure discontinue caractéristique d'une trop grande vitesse de soudage.

Il en résulte que l'augmentation de la puissance de l'arc électrique, nécessaire au maintien de la pénétration ne peut résulter que d'une augmentation de l'intensité.

Or, lorsque l'on augmente significativement l'intensité, sur l'une ou plusieurs des cathodes mises en oeuvre, on observe une instabilité accrue des arcs électriques et une formation d'un cordon de soudure très "vaguelé", c'est-à-dire une succession de cratères et de bosses à la surface du cordon de soudure.

Ce phénomène est appelé "soufflage magnétique".

On comprend aisément qu'un tel cordon de soudage "vaguelé" n'est pas apte à permettre un laminage et/ou un tréfilage subséquent exempt de problème de rupture.

Par ailleurs, d'autres problèmes surviennent lorsque le tube à souder est préalablement rempli d'éléments de remplissage, par exemple des poudre métalliques.

Dans ce cas, l'exécution d'une soudure à pleine pénétration au moyen d'un procédé TIG multicathodes engendre de manière plus ou moins aléatoire, une fusion partielle desdits éléments de remplissage qu'il contient et/ou une contamination du métal fondu qui ne doit normalement résulter que de la fusion du feuillard.

Il s'en suit que le tube ne peut plus être laminé et/ou tréfilé sans que cette opération ne provoque une ou des ruptures étant donné que:

- la contamination du métal fondu par les éléments de remplissage conduit à la formation de défauts ou pour le moins d'un alliage dur, fragile et impossible à déformer sans provoquer de fissures, lesquelles sont autant d'amorces pour une rupture ultérieure du tube;
- la fusion partielle des éléments de remplissage à l'intérieur du tube donne naissance, après solidification, à de grosses particules indéformables qui blessent le tube jusqu'à provoquer sa rupture lorsqu'au cours d'un laminage ou d'un tréfilage ultérieur, le diamètre intérieur dudit tube devient de l'ordre de grandeur de la dimension des particules résultant de la fusion; et

- la volatilisation d'éléments de remplissage internes au tube provoque l'expulsion vers l'extérieur d'une partie de la soudure en fusion du fait de l'augmentation de la pression interne du tube.

Le document US-A-4,396,820 propose une première solution pour lutter contre ce phénomène, à savoir de procéder à un soyage de l'un des bords à assembler afin de permettre un soudage du tube sur toute son épaisseur sans que le métal en fusion puisse venir au contact des éléments de remplissage contenus dans le tube.

Toutefois, ce procédé présente l'inconvénient de compliquer l'opération de formage, de réduire le volume "libre" à l'intérieur du tube et d'altérer la symétrie axiale du tube.

Une autre solution consisterait à effectuer des soudures à pénétration partielle, c'est-à-dire à ne provoquer qu'une fusion d'une partie de l'épaisseur du feuillard au niveau des deux bords longitudinaux devant être soudés l'un à l'autre. Cependant, les soudures à pénétration partielle sont unanimement proscrites par l'homme du métier car la partie du plan de joint non soudé constitue une entaille sous la racine du cordon de soudure, laquelle est réputée se propager lors de toute réduction de la section du tube imposée par une étape de tréfilage ou de laminage subséquente.

Par ailleurs, le document JP-A-59113996, considéré comme l'art antérieur le plus proche, enseigne un procédé de soudage monocathode pour souder les bords longitudinaux d'un tube, dans lequel une prise de masse en forme de roue vient appuyer sous le tube de manière à répartir le courant de soudage de part et d'autre du joint, entre l'électrode et la prise de masse. Ce procédé ne comprenant qu'une seule électrode est cependant limité en vitesse.

Le but de la présente invention est donc de proposer un procédé et un dispositif de fabrication de tubes métalliques ne présentant pas les inconvénients de l'art antérieur.

L'invention concerne alors un procédé de fabrication d'un tube métallique formé à partir d'une feuille métallique ayant deux bords longitudinaux sensiblement rectilignes et parallèles, dans lequel on soude, l'un avec l'autre, les deux bords longitudinaux de la feuille métallique au moyen d'un procédé de soudage mettant en oeuvre au moins un arc électrique entre au moins trois électrodes (Ei) et ladite feuille métallique au contact d'au moins trois prises de masses (PMi),

dans lequel le plan de chaque prise de masse (PMi) est positionnée à une distance ($e_i$) comprise entre -5 mm et +25 mm par rapport au plan de chaque électrode (Ei) correspondante, le sens positif étant le sens de déplacement relatif de la feuille métallique par rapport aux électrodes (Ei).

Dans le cadre de la présente invention, on appelle distance (ei) entre le plan de l'électrode et le plan de prise de masse, la distance séparant le plan passant par l'extrémité de chaque électrode (Ei) et perpendiculaire au tube du plan passant par l'extrémité de chaque prise de masse (PMi) correspondante et perpendiculaire audit tube; les plans (PEi) et (PPMi) sont donc parallèles l'un à l'autre.

Selon le cas, le procédé de l'invention comprend l'une ou plusieurs des caractéristiques suivantes:

- la distance (ei) plan électrode/plan prise de masse est comprise entré 0 mm et +20 mm et, de préférence, entre +7 mm et +15 mm;
- on règle les écartements entre les électrodes afin d'assurer l'accrochage du pied de chaque arc électrique sur du métal solidifié;
- l'écartement entré une électrode ($E_1$) et une électrode ($E_2$) successives est inférieur ou égale à l'écartement entre une électrode (E2) et une électrode ($E_3$) successives;
- l'intensité du courant parcourant une électrode est supérieure ou égale à 50 A et, de préférence, supérieure ou égale à 100 A;
- la vitesse relative de déplacement de la feuille est supérieure ou égale à 2 $m.s^{-1}$, de préférence supérieure ou égale à 5 $m.s^{-1}$;
- il comporte, en outre, une étape de chanfreinage d'au moins une partie des deux bords longitudinaux de la feuille métallique, de sorte de présenter avant soudage, un chanfrein en "V" ayant un angle d'ouverture ($\alpha$) compris entre environ 30° et environ 120°, de préférence entre environ 60° et environ 90°;
- ledit chanfrein a une hauteur comprise entre environ 1/3 et environ 2/3 de l'épaisseur de la feuille métallique;
- la feuille métallique est remplie d'au moins un élément de remplissage, préalablement à son soudage;
- on réalise une soudure incomplète des deux bords longitudinaux de ladite feuille métallique, l'un avec l'autre, par fusion partielle d'environ 20% à environ 80% de l'épaisseur de ladite feuille au niveau desdits bords et, de préférence, d'environ 40% à environ 60%;
- on réalise, en outre, une soudure de forge desdits bords, l'un avec l'autre, par application d'une pression mécanique latérale sur au moins une partie de la paroi externe de la feuille, de sorte d'obtenir une soudure sensiblement complète selon toute l'épaisseur;
- après soudage, le tube subit au moins une étape de tréfilage, de laminage et/ou recuit de recristallisation.

L'invention concerne également un dispositif de fabrication d'un tube métallique à partir d'une feuille métallique ayant deux bords longitudinaux sensiblement rectilignes et parallèles, comportant des moyens de soudage à l'arc électrique pour souder, l'un avec l'autre, les deux bords longitudinaux de la feuille métallique mettant en oeuvre au moins trois électrodes (Ei) et au moins trois prises de masses (PMi) correspondantes, chaque prise de masse (PMi) étant positionnée à une distance ($e_i$) comprise entre -5 mm et +25 mm par rapport à chaque électrode (Ei), le sens positif étant le sens de déplacement relatif de la feuille métallique par rapport aux électrodes (Ei).

L'invention va maintenant être décrite plus en détail à l'aide d'exemples donnés à titre illustratif, mais non limitatif et en référence aux figures annexées.

Exemple I

L'exemple 1 vise à étudier l'influence de la position de la ou des prises de masses (PMi) par rapport aux électrodes (Ei) sur la vitesse (V) de soudage et l'aspect du joint de soudure obtenu.

Cet exemple a été réalisé à l'aide d'une torche de soudage TIG multi-cathodes avec flux de protection gazeux, le gaz utilisé étant un mélange Argon/Hydrogène type Noxal 3™ de Air Liquide et la torche mettant en oeuvre 3 électrodes (E1, E2, E3) espacées de 25 mm.

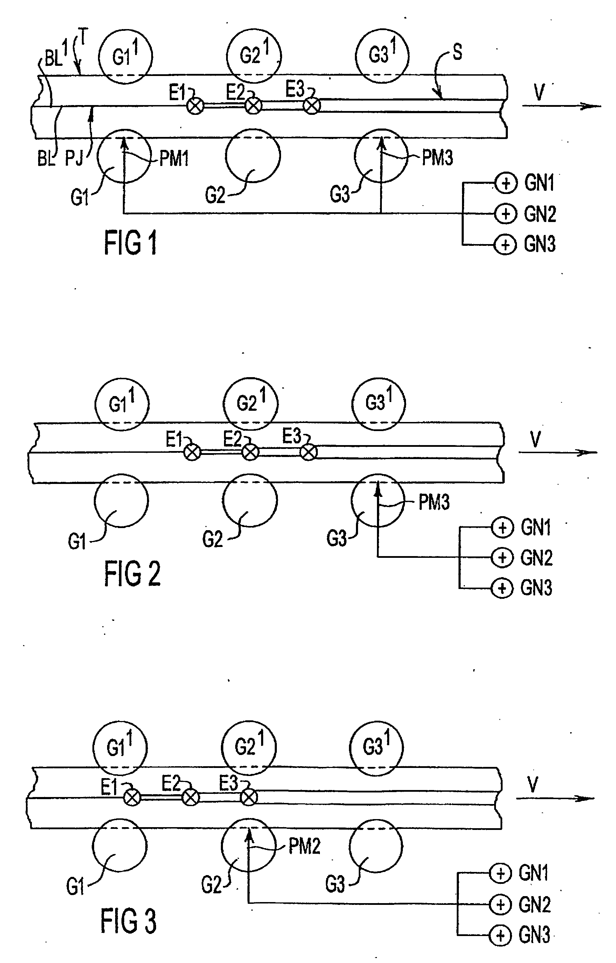

Plus précisément, et ainsi que schématisé sur les figures 1 à 6, un tube T métallique est formé, en continu, successivement en "U" (non représenté), puis en "O" par rapprochement des 2 bords longitudinaux BL et BL' d'une feuille métallique animée d'une vitesse V de déplacement non nulle selon son axe longitudinal (flèche V sur les figures).

Les 3 électrodes E1, E2 et E3 agissant comme cathodes sont reliées aux pôles négatifs de générateurs de soudage (non représenté) alors que les prises de masses PM1, PM2, PM2' et PM3 sont reliées, selon le cas, aux pôles positifs de 3 générateurs GN1, GN2 et GN3, de sorte que les arcs électriques puissent s'établir entre les électrodes E1, E2 et E3 et le tube à souder, lequel est relié aux pôles positifs des générateurs GN1 et GN2 et GN3 par l'intermédiaire desdites prises de masses PM1, PM2, PM2' et PM3 respectivement.

Selon la figure considérée, le nombre et la position des prises de masses varient.

Le plan de joint PJ de soudure résultant du rapprochement des 2 bords longitudinaux BL et BL' de la feuille métallique, l'un vers l'autre, par exemple de par l'action mécanique à la surface du tube T à souder de galets d'entraînement et de pressage (G1, G2, G3, G1', G2', G3'), est soumis à une opération de soudage par action simultanée de 3 arcs électriques (non représentés) jaillissant entre les électrodes E1 à E3 et le tube T.

La soudure S obtenue est d'aspect et de pénétration variables en fonction des conditions opératoires mises en oeuvre, lesquelles sont résumées dans les tableaux I et II suivants, dans lesquels I1, I2 et I3 sont les intensités du courant à travers les électrodes E1, E2 et E3 respectivement, V est la vitesse de soudage, et U est la tension de soudage aux électrodes E1 à E3.

TABLEAU I

| ESSAI N° | CONFIGU-RATION SELON | I1 (EN AMPERE) | I2 (EN AMPERE) | I3 (EN AMPERE) | V (m.min-1) | U (EN VOLT) | PENETRATION DE LA SOUDURE (%) | SOUDURE | ARCS ELECTRIQUES |
|---|---|---|---|---|---|---|---|---|---|
| 1 | Fig. 1 | 100 | 140 | 200 | 2 | 13 à 15 | 50 | aspect correct | stables inclinés, dans le sens du déplacement |
| 2 | Fig. 1 | 100 | 140 | 250 | 2 | 13 à 15 | 50 | aspect "vaguelé" (succession de cratères et de bosses) | instables |
| 3 | Fig. 2 | 100 | 140 | 250 | 2 | 13 à 15 | 50 | aspect lisse et uniforme | stables |
| 4 | Fig. 3 | 100 | 140 | 250 | 3 | 13 à 15 | 50 | aspect régulier, mais caniveau continu sur un côté | déflexion latérale |
| 5 | Fig. 4 | 100 | 140 | 250 | 3 | 13 à 15 | 50 | aspect régulier et uniforme | stables |
| 6 | Fig. 5 | 150 | 180 | 280 | 4 | 13 à 15 | 40 | aspect régulier | problème d'amorçage d'un des arcs |
| 7 | Fig. 6 | 200 | 400 | 220 | 6,4 | 14 à 16 | 35 | aspect régulier aucun défaut | très bonne stabilité |

Il apparaît donc clairement au vu du tableau I précédent, que le trajet suivi par le courant à travers le tube en cours de fabrication a une incidence directe non seulement sur l'aspect du cordon de soudure, mais aussi sur la stabilité des arcs électriques; cette incidence étant d'autant plus marquée que les intensités mises en oeuvre sont élevées.

Ainsi, bien que les essais n° 1 et n° 2 ne se différencient que par la valeur de l'intensité I3, l'essai n° 2 conduit à un cordon de soudage d'aspect médiocre et à une forte instabilité des arcs électriques.

Toutefois, l'essai n° 3 montre que l'on peut remédier à ces problèmes en adoptant la configuration représentée sur la figure 2, c'est-à-dire en ne conservant qu'une seule prise de masse PM3, laquelle est située en aval des électrodes E1 à E3; le cordon de soudure redevenant d'aspect uniforme et lisse.

L'essai n°4 montre que lorsque l'on augmente la vitesse de soudage en adoptant la configuration de la figure 3, les autres paramètres restant inchangés, on observe, là encore, une déflexion latérale des arcs électriques conduisant à une dégradation de l'aspect de la soudure.

Néanmoins, il est possible de remédier à ces problèmes en adoptant la configuration de la figure 4, laquelle se différencie de la figure 3 uniquement par la présence d'une prise de masse PM2' supplémentaire symétrique de la prise de masse PM2 par rapport au tube.

Il ressort de ces différents essais qu'adopter une configuration symétrique tant géométrique qu'électrique, par rapport au plan dans lequel sont situées les électrodes permet d'obtenir une grande souplesse de réglage et d'augmenter les intensités du courant à travers les cathodes, donc la vitesse de soudage et ce, pour une pénétration donnée et sans problème de "soufflage magnétique" des arcs électriques, c'est-à-dire de déflexion latérale de ceux-ci.

Il résulte de ces essais que, pour obtenir une soudure d'aspect correct et des arcs électriques stables, il est nécessaire de positionner la ou les prises de masses sur la génératrice du tube opposé au plan de soudure.

Toutefois, cette condition n'est pas suffisante à elle seule.

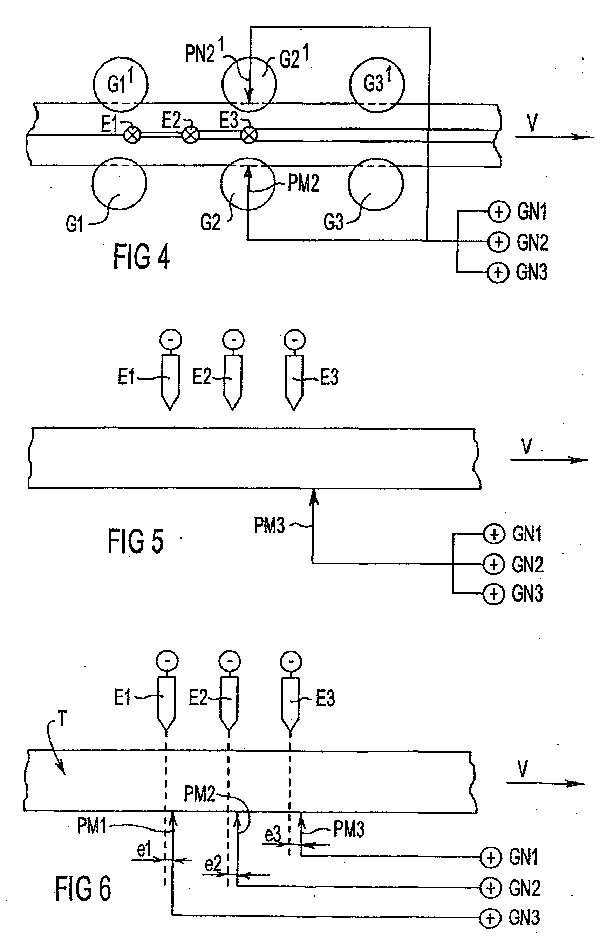

En effet, il a été observé, par ailleurs, que si l'on dispose une prise de masse à l'intérieur de l'espace séparant la première de la dernière électrode, la souplesse des réglages, la stabilité des arcs électriques et la régularité des cordons de soudure sont moins bonnes que si la prise de masse est positionnée à l'aplomb de la dernière électrode ou légèrement au-delà, ainsi que représenté sur la figure 5 et en adoptant les paramètres de l'essai n° 6.

Toutefois, si l'essai n° 6 a permis d'obtenir un cordon de soudure d'aspect satisfaisant, il a été observé, en outre, des difficultés d'amorçage de l'électrode centrale.

Par ailleurs, l'existence d'une prise de masse unique conduit à ce que la somme des courants mis en oeuvre dans les diverses électrodes provoque un échauffement plus ou moins important et durable de la zone de contact mobile entre le tube qui se déplace et la prise de masse qui est fixe.

Il est possible de remédier à ce problème en contrôlant les chemins empruntés par les courants à travers le tube et en minimisant les interactions entre les arcs.

Ceci peut être réalisé au moyen d'un système multimasses, c'est-à-dire mettant en oeuvre plusieurs prises de masse isolées les unes des autres et positionnées chacune en regard de l'électrode à laquelle elle correspond, ainsi que représenté sur la figure 6 et expérimenté dans l'essai n° 7.

Plus précisément, l'essai n° 7 met en oeuvre 3 électrodes E1 à E3 associées chacune à 3 prises de masses PM1 à PM3, respectivement.

Si l'on appelle $e_i$ la distance séparant la verticale de l'électrode $E_i$ de la position de la prise de masse $PM_i$ (avec i = 1,2 ou 3), ainsi que représenté sur la figure 6, on constate que les problèmes d'amorçage d'arcs électriques disparaissent totalement lorsque la distance $e_i$ est comprise entre - 5 et + 25 mm, le sens positif étant le sens de déplacement relatif du tube par rapport aux éléments, tel que donné par la flèche v.

De préférence, la souplesse des réglages électriques conduit à un aspect de soudure encore meilleur, lorsque $e_i$ est compris entre + 7 et + 15 mm; ceci permet en outre d'augmenter très sensiblement les intensités mises en oeuvre et donc la vitesse de soudage tout en conservant une très bonne stabilité d'arc électrique et un aspect de cordon de soudage sans défaut.

A titre indicatif, sur la figure 6, la distance e1 entre l'électrode E1 et la prise de masse PM1 est de l'ordre de 9 mm, la distance e2 est de l'ordre de 10 mm et la distance e3 est de l'ordre de 11 mm.

Afin de vérifier l'essai n° 7, un essai n° 8 a été réalisé au moyen d'une torche octocathode, c'est-à-dire mettant en oeuvre 8 électrodes et 8 prises de masses, chaque électrode étant associée à une prise de masse, de sorte que la distance $e_i$ séparant chaque électrode $e_i$ de chaque prise de masse $PM_i$ est comprise entre - 5 et + 25 mm, voire entre + 7 et + 15 mm.

Dans cet exemple 8 la configuration adoptée est analogue à la configuration de la figure 6 et les paramètres de soudage adoptés sont donnés dans le tableau II ci-après.

TABLEAU II

| ESSAI N° | I1 (A) | I2 (A) | I3 (A) | I4 (A) | I5 (A) | I6 (A) | I7 (A) | I8 (A) | U (V) | V m.min$^{-1}$ | SOUDURE | ARCS ELECTRIQUES |
|---|---|---|---|---|---|---|---|---|---|---|---|---|
| 8 | 350 | 350 | 240 | 230 | 220 | 210 | 200 | 180 | 14 à 16 | 7 | aspect régulier et sans défaut | très bonne stabilité |

Cet essai 8 confirme les observations de l'essai n° 7, à savoir que l'on obtient une soudure d'aspect régulier et sans défaut, et des arcs électriques ayant une très bonne stabilité et s'amorçant sans problème, lorsque les électrodes et leurs prises de masses associées sont positionnées de sorte que la distance ei soit comprise entre - 5 et + 25 mm.

Exemple 2

Lorsque le tube fabriqué au moyen du procédé de l'invention doit être rempli d'éléments de remplissage tels des poudres, avant d'être formé en "O" puis soudé, voire subséquemment laminé et/ou tréfilé jusqu'à un diamètre d'utilisation, l'exécution d'une soudure à pleine pénétration des deux bords longitudinaux de la feuille métallique formant le tube risque d'engendrer une fusion au moins partielle des éléments de remplissage qu'il contient et/ou une contamination du métal fondu.

Afin de résoudre ce problème de fusion partielle des éléments de remplissage contenus dans un tel tube, tel un fil fourré, il peut être nécessaire de réaliser une soudure à pénétration partielle, c'est-à-dire selon une partie seulement de l'épaisseur de la paroi dudit tube.

Dans l'exemple 2, un tube contenant des poudres de remplissage, c'est-à-dire un fil fourré, de 16,4 mm de diamètre est soudé sur une faible proportion de son épaisseur (pénétration de l'ordre de 40 à 50% environ) au moyen d'un procédé de soudage mettant en oeuvre plusieurs électrodes, tel un procédé TIG multicathodes analogue à ceux décrits dans l'exemple 1.

Après soudage, le tube est soumis à des étapes de laminage, tréfilage, recuit de recristallisation et tréfilage final jusqu'à un diamètre de 1,2 mm.

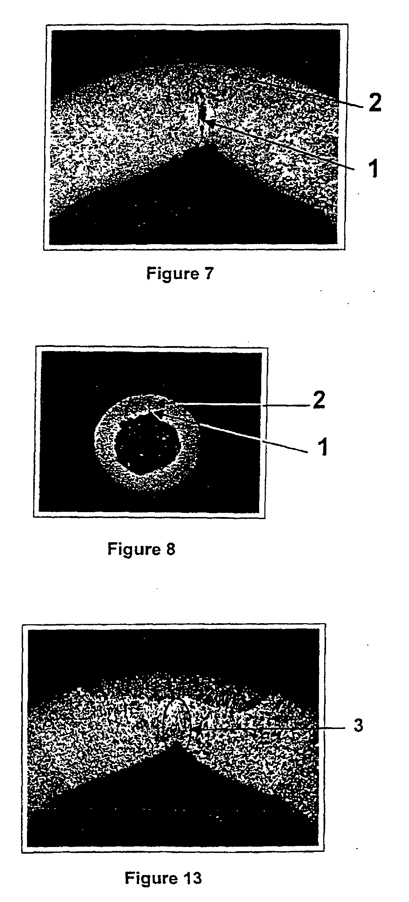

Les figures 7 et 8 représentent le fil fourré obtenu après soudage et laminage jusqu'à un diamètre de 12,7 mm (figure 7), et après tréfilage jusqu'à un diamètre de 1,2 mm (figure 8).

On constate, de manière surprenante, que les différentes étapes de déformation dû fil (laminage, tréfilage...) n'engendrent pas de propagation de la fissure 1 que constitue la partie du plan de joint non soudé.

En fait, le rapport initial entre la partie soudée 2 et non soudé 1, est conservé quelque soit le diamètre d'observation, c'est-à-dire le diamètre du fil fourré après déformation.

Il ressort de cet exemple 2 qu'il est possible de réduire par laminage et/ou tréfilage la section d'un tube soudé seulement sur une partie de son épaisseur et ce sans risquer une rupture dudit fil fourré par propagation de la fissure.

En outre, cette technique permet d'éviter toute contamination de la soudure par les poudres contenues dans ledit tube et/ou une fusion au moins partielle des poudres contenues dans le tube.

Cette technique peut être également appliquée au soudage d'un tube vide car elle permet d'augmenter très significativement la productivité, étant donné que, toute chose étant égale par ailleurs, la vitesse de soudage est une fonction décroissante de la pénétration désirée.

Exemple 3

Comme exposé dans l'exemple 1 précédent, la configuration de la figure 6 permet, pour une torche tricathodes, d'obtenir un joint de soudure d'aspect lisse et régulier et de pallier tout problème de déflexion ou "soufflage magnétique". Dans le cas d'une torche hexacathodes (électrodes E1 à E6), une augmentation de l'intensité sur les électrodes de queue (électrodes E4, E5 et/ou E6) permet d'augmenter la vitesse de soudage, mais à partir d'une certaine valeur d'intensité, il se produit un blocage du "bain liquide" en amont de ces électrodes, lequel blocage du "bain liquide" se traduit par la formation d'un bourrelet de métal en amont de l'électrode E6.

Ce bourrelet de métal tend à réduire la distance séparant l'électrode du bain liquide de métal en fusion et peut, lorsqu'il grossit, entrer en court-circuit avec l'électrode et la détruire.

Parfois, le bourrelet de métal peut passer de manière périodique, sous l'électrode sans la détruire, mais, dans ce cas, l'aspect de la soudure s'en trouve fortement altéré de par la présence de bosses irrégulières distribuées sur toute la longueur du cordon de soudage.

Une observation attentive du processus conduisant à la formation de ce bourrelet de métal montre que celui-ci apparaît lorsque l'un des arcs électriques attaque du métal fondu, c'est-à-dire du métal ayant été fondu par les électrodes situées en amont dudit arc et qui ne s'est pas encore solidifié.

Les essais 9 à 12 consignés dans le tableau III ci-après ont été réalisés au moyen d'une torche TIG hexacathodes présentant un écartement d'environ 25 mm entre les différentes électrodes.

La configuration adoptée dans cet exemple 3 est analogue de la figure 6, c'est-à-dire que l'électrode E1 est l'électrode située le plus en amont et l'électrode E6 est celle située le plus en aval, lorsque l'on considère le sens de déplacement relatif du fil (selon la flèche V sur la figure 6).

TABLEAU III

| ESSAI N° | I1 (A) | I2 (A) | I3 (A) | I4 (A) | I5 (A) | I6 (A) | U (V) | V (m.min⁻¹) | BOURRELET DE METAL |
|---|---|---|---|---|---|---|---|---|---|
| 9 | 220 | 220 | 170 | 170 | 170 | 170 | 14 à 16 | 6 | oui, en amont de l'électrode E6 |
| 10 | 220 | 220 | 170 | 150 | 150 | 170 | 14 à 16 | 6 | non |
| 11 | 220 | 220 | 170 | 150 | 150 | 170 | 14 à 16 | 5,4 | oui, en amont de l'électrode E6 |
| 12 | 240 | 240 | 240 | 230 | 0 | 200 | 14 à 16 | 6 | non |

I1, I2, I3, I4, I5 et I6 sont les intensités de courant parcourant respectivement les électrodes E1 à E6.

Dans les conditions de l'essai n° 9, on observe la formation d'un bourrelet de métal en amont de l'électrode E6.

Toutefois, ainsi qu'il ressort de l'essai n°10, une diminution de l'intensité du courant traversant les électrodes E4 et E5, sans modification de l'intensité du courant sur l'électrode E6, conduit à une disparition de ce bourrelet de métal.

Ceci peut s'expliquer par le fait que les électrodes E4 et E5 transmettent au tube une énergie moins importante dans l'essai 10 que dans l'essai 9, ce qui implique que le métal fondu à plus de temps pour se solidifier avant d'arriver à l'électrode E6, dans l'essai n° 10, de sorte que l'arc électrique généré par l'électrode E6 prend naissance sur du métal solidifié (essai 10) et non sur du métal fondu (essai 9).

Il ressort de l'essai n° 11 qu'une réduction de la vitesse de soudage, sans modification des autres paramètres électriques, provoquent une augmentation de l'énergie de soudage et, par conséquent, une diminution de la vitesse de refroidissement de la soudure avec apparition d'un bourrelet de métal devant l'électrode E6.

En d'autres termes, contrairement à l'essai n°10, dans l'essai n° 11, la soudure est encore à l'état liquide en arrivant sous l'électrode E6 et l'arc électrique généré par l'électrode E6 prend donc naissance sur du métal en fusion, d'où formation d'un bourrelet de métal. Ces observations sont confirmées par l'essai n° 12.

En effet, dans l'essai n° 12, bien que l'énergie globale mise en oeuvre par les 5 premières électrodes (E1 à E5), soit identique à celle de l'essai n° 9, à savoir une intensité globale de 950 A, et que l'intensité sur la sixième électrode (E6) soit plus élevée dans l'essai n° 12 (200 A) que dans l'essai n° 9 (170 A) il n'y a pas de formation de bourrelet dans l'essai n° 12, contrairement à l'essai n° 9. Ceci s'explique par le fait que dans l'essai n° 12, le métal en fusion a eu le temps de se solidifier durant son trajet entre les électrodes E4 et E6, l'électrode E5 n'étant pas alimentée en courant.

Il ressort clairement des essais 9 à 12, que l'écartement entre les différentes électrodes ne doit pas uniquement être dicté par les contraintes d'isolement électrique, de refroidissement ou de mécanique pure, contrairement à la pratique usuelle , mais doit aussi prendre en compte un certain nombre de paramètre conduisant à une optimisation du procédé de soudage et par, là même, du procédé de fabrication du tube.

En effet, en soudage TIG, une partie de l'énergie de l'arc électrique est transférée à la surface de la pièce à souder. Si l'on néglige les mouvements du bain liquide dont les origines sont diverses, mais dont la principale est l'effet Marangoni, c'est-à-dire un mouvement lié au gradient de tension superficielle en fonction du gradient de température entre le centre et le bord de la zone fondue, la propagation de la chaleur dans l'épaisseur de la pièce à souder, ici le tube, se fait par conduction.

Donc, si l'on veut obtenir une pénétration donnée en soudant à une vitesse élevée, il faut maintenir la surface du cordon de soudure à la plus haute température possible et suffisamment longtemps pour que l'isotherme de fusion ait le temps d'atteindre la pénétration souhaitée.

Or, la température la plus élevée que peut atteindre un matériau en fusion est la température d'ébullition de l'élément le plus volatil dudit matériau. Par exemple, dans le cas des aciers, l'élément le plus volatil est, en général, le manganèse dont la température d'ébullition est de l'ordre de 2 060°C.

On voit alors que, pour optimiser le rendement énergétique d'un procédé de soudage qui procède par conduction simultanément à la vitesse d'exécution de la soudure, il faut avoir un apport énergétique continu, de sorte de maintenir la surface au voisinage de la température d'ébullition pendant un temps tel que l'isotherme "température de fusion" atteigne la profondeur, c'est-à-dire l'épaisseur, désirée.

En d'autres termes, il faut mettre en oeuvre une source d'énergie linéaire de forte puissance à son origine, de telle sorte que le métal soit rapidement porté à la température d'ébullition de l'élément le plus volatil, puis de puissance plus faible ensuite, étant donné qu'il suffit de compenser les pertes dues à la conduction et au rayonnement.

Il en résulte que la longueur de cette source d'énergie dépend uniquement de la vitesse de soudage, de la pénétration souhaitée et des caractéristiques thermiques du matériau, telle la diffusivité.

Dans le cas présent, c'est-à-dire en soudage mulitcathodes, il apparaît alors que:

- les intensités de courant les plus fortes doivent être concentrées sur les électrodes les plus en amont, de sorte de fournir l'énergie suffisante pour porter la surface du joint de soudure à haute température;
- le nombre d'électrodes devra être d'autant plus élevé que l'on souhaite souder rapidement;
- la distance entre les différentes électrodes doit être ajustée pour que le pied anodique des arcs électriques s'accroche sur du métal tout juste solidifié, de sorte d'éviter la formation des bourrelets précédemment décrits, tout en assurant un minimum de variations de température à la surface du joint de soudure;
- l'intensité du courant traversant les électrodes de queue, c'est-à-dire situées le plus en aval, devra être réglée pour apporter une énergie juste suffisante pour permettre d'élever la température de surface de matériau à souder jusqu'à la température d'ébullition de l'élément le plus volatil du joint de soudure.

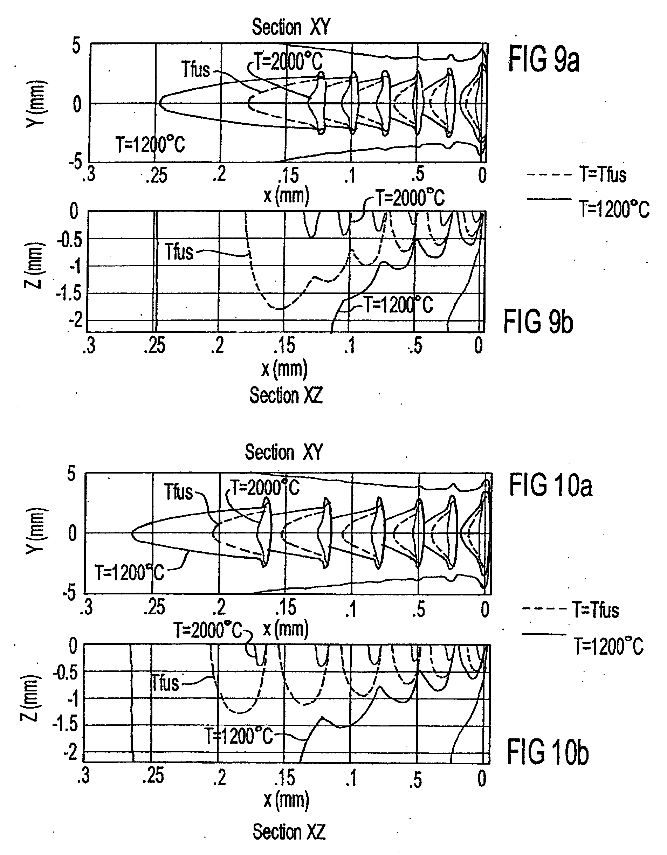

Les figures 9a et 9b et 10a et 10b confirment la nécessité de prévoir un écartement croissant entre les cathodes afin d'assurer l'accrochage des pieds de chaque arc électrique sur du métal solidifié.

Plus précisément, les figures 9a et 9b représentent les isothermes à 2 000°C, à la température de fusion de 1 535°C (Tfus) et à 1 200°C, lesquelles ont été calculées à partir des équations de propagation de la chaleur et lesquelles ont été positionnées dans le plan correspondant soit à la surface du cordon, c'est-à-dire à une vue en coupe selon les axes X et Y avec Z = 0 (figure 9a), ou soit dans le plan perpendiculaire passant par l'axe dudit cordon, c'est-à-dire selon les axes X et Z avec Y=0 (figure 9b).

La torche utilisée pour obtenir le joint de soudure représenté sur les figures 9a et 9b est une torche hexacathode dont les électrodes E1 à E6 sont séparées les unes des autres d'une distance égale à environ 25 mm et sont parcourues respectivement par les courants suivants: I1= 350 A, I2 = 225 A, I3 = 200 A et I4=I5=I6= 250 A.

En outre, la vitesse de soudage est de 8 m.s⁻¹ et le tube à souder a une épaisseur de 2.2 mm environ.

Il apparaît clairement sur les figures 9a et 9b que, dans ces conditions, les électrodes E5 et E6 sont situées au-dessus du bain de métal liquide formé par fusion au moins partielle des bords du tube à souder au moyen des électrodes E1 à E4 qui les précédent, ce qui implique la formation d'un bourrelet métallique à la surface du cordon de soudure, ainsi que susmentionné.

Les figures 10a et 10b sont analogues aux figures 9a et 9b, à l'exception du fait que, dans ce cas, les électrodes ne sont plus équidistantes les unes des autres.

Plus précisément, la distance entre l'électrode E1 et E2 et celle entre l'électrode E2 et E3 sont égales à 25 mm, étant donné que, comme nous l'avons vu précédemment, celles-ci ne se trouvent pas au-dessus de bain de métal liquide.

Toutefois, la distance entre E3 et E4 a été portée à 30 mm, celle entre E4 et E5 à 40 mm et celle entre E5 et E6 à 45 mm.

Il apparaît clairement au vu des figures 10a et 10b, qu'augmenter les distances séparant les dernières électrodes (E4 à E6), tout en conservant les mêmes intensités de courant et la même vitesse de soudage, permet d'obtenir des isothermes de température de fusion distinctes pour chaque électrode, c'est-à-dire un amorçage des différents arcs électriques relatifs à chaque électrode sur du métal solidifié (figure 10a et 10b) et non plus sur du métal fondu (figure 9a et 9b).

Exemple 4

Comme nous l'avons vu dans l'exemple 3, lors de la mise en oeuvre d'un procédé de soudage multicathodes, la pénétration dans la zone fondue dépend de la conduction de la chaleur depuis la surface du tube vers l'intérieur de celui-ci, c'est-à-dire selon son épaisseur.

De là, lorsque l'on augmente l'épaisseur du tube, la pénétration décroît non seulement en valeur relative, c'est-à-dire en pourcentage de l'épaisseur mais aussi en valeur absolue, c'est-à-dire que pour une même vitesse de soudage et pour de mêmes intensités de soudage, la pénétration est d'autant plus efficace que l'épaisseur est faible.

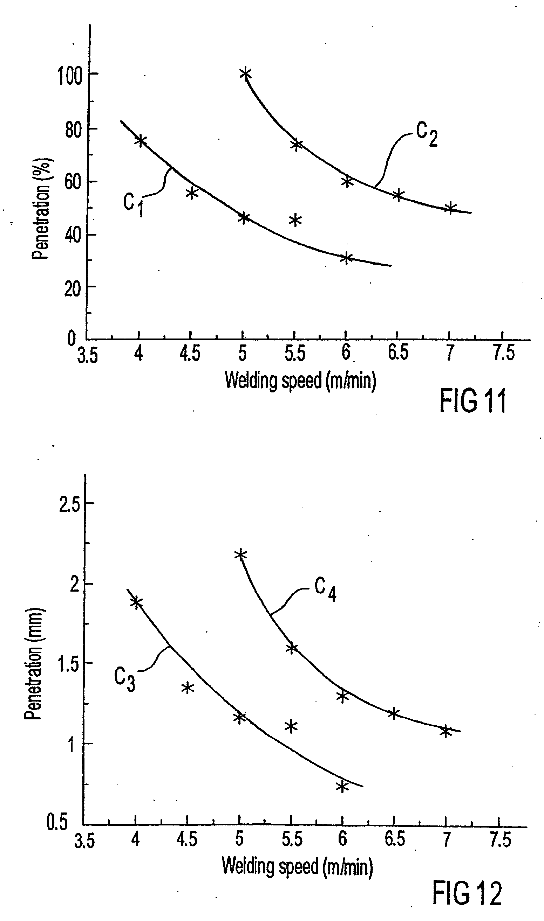

Ceci est d'ailleurs confirmé par les figures 11 et 12 lesquelles illustrent l'efficacité de pénétration (en % et en mm, respectivement) en fonction de la vitesse de soudage d'un procédé TIG heptacathode et ce, pour deux tubes d'épaisseur différente.

Plus précisément, les courbes C1 et C3 ont été obtenues avec un tube d'épaisseur 2,5 mm et les courbes C2 et C4 avec un tube d'épaisseur 2,2 mm; dans tous les cas, les intensités du courant traversant les différentes électrodes E1 à E7 sont respectivement les suivantes: I1 = 320 A, I2 = 300 A, I3 = I4 = I5 = I6 = I7 = 220 A.

Les essais 13 à 16, consignés dans le tableau IV ci-après, visent à étudier l'influence d'un chanfreinage des bords longitudinaux du tube devant être soudés l'un avec l'autre.

Ces essais 13 à 16 ont été réalisés au moyen d'un procédé TIG hexacathodes, dont les électrodes E1 à E6 sont respectivement traversées par les courants suivants: I1 = 360 A, I2 = 320 A, I3 = 250 A, I4 = 220 A, I5 = 190 A et I6 = 180 A.

En outre, la tension de soudage est de l'ordre de 14 à 16 v, la vitesse de soudage est de l'ordre de 6 m.min⁻¹ et le tube à souder à une épaisseur d'environ 2.5 mm.

TABLEAU IV

| ESSAI N° | PENETRATION (en %) | ANGLE α DU CHANFREIN | HAUTEUR DU TALON (en mm) |
|----------|--------------------|-----------------------|--------------------------|
| 13 | 40 | - | - |
| 14 | 50 | 30° | 1,3 |
| 15 | 60 | 60° | 1,3 |
| 16 | 80 | 90° | 1,3 |

Il ressort clairement du tableau IV précédent qu'un chanfreinage des bords du tube permet d'augmenter la pénétration de la soudure.

En d'autres termes, toute chose étant égale par ailleurs, on peut augmenter la pénétration ou pour une même pénétration augmenter la vitesse de soudage, en faisant en sorte que l'énergie apportée par les premières cathodes ne soit plus transférée à la surface du tube, mais partiellement au moins dans son épaisseur, ce qui peut être réalisé par le biais d'un chanfreinage avant soudage des bords du tube.

On constate également, au vu du tableau IV, que pour une même hauteur de talon (1,3 mm), c'est-à-dire une même hauteur de bord non chanfreinée, l'efficacité de pénétration augmente proportionnellement à l'angle (α) d'ouverture du chanfrein; le chanfrein ayant une forme sensiblement en "V".

Avantageusement, on choisit de réaliser un chanfrein à une hauteur h ou talon comprise entre environ 1/3 et environ 2/3 de l'épaisseur de la feuille métallique à partir de laquelle est réalisé le tube.

Exemple 5

Comme nous l'avons vu dans les exemples précédents et illustrés, notamment, sur les figures 7 et 8, la réalisation d'un soudage à pénétration partielle laisse subsister une fissure sous le joint de soudure (référence 1 sur la figure 7).

Or, dans certains cas, il peut être préféré d'obtenir un tube soudé selon toute son épaisseur, c'est-à-dire sensiblement exempt d'une telle fissure.

Pour se faire, il suffit de compléter la soudure réalisée par fusion de la partie supérieure du joint par une soudure de forgeage de la partie inférieure; une soudure de forge étant une liaison intime de deux parties portées à très haute température, l'une avec l'autre.

A titre d'exemple, dans le cas des aciers, une soudure de forge est possible entre deux parties lorsque la température desdites deux parties est comprise entre environ 1 200°C et la température de fusion dudit acier.

Dans le cas présent pour réaliser une telle soudure de forge complémentaire de la soudure par fusion de la partie supérieure du joint, on opère une compression sur le tube, c'est-à-dire que l'on applique sur au moins une partie de la surface externe du tube une force tendant au rapprochement des deux bords à forger l'un vers l'autre, lesquels sont portés à une température supérieure à la température minimale nécessaire pour obtenir une telle soudure de forge de par l'énergie apportée par la fusion, laquelle se propage dans l'épaisseur du tube et notamment dans la partie inférieure du joint de soudure, laquelle est susceptible d'être soudée par forgeage.

Un tel forgeage est représentée sur la figure 13 qui présente une vue partielle en coupe transversale d'un tube fabriqué par le procédé selon l'invention.

Sur cette figure 13, le joint de soudure est constitué d'une première partie supérieure plus foncée soudée par fusion et d'une partie inférieure soudée par forgeage; la zone de soudure de forge étant sensiblement l'axe de symétrie de la ligne 3.

En fait, cette zone de l'épaisseur du tube pouvant subir une telle soudure de forge correspond approximativement à la zone qui est à une température d'au moins 1 200°C sur la face interne du tube, à savoir:

- la zone correspondant à X = -110 mm à X= -245 mm sur la figure 9b, et
- la zone correspondant à X= -135 mm à X= -260 mm sur la figure 10b.

**Revendications**

**1.** Procédé de fabrication d'un tube métallique formé à partir d'une feuille métallique ayant deux bords longitudinaux sensiblement rectilignes et parallèles, dans lequel on soude, l'un avec l'autre, les deux bords longitudinaux de la feuille métallique au moyen d'un procédé de soudage mettant en oeuvre au moins un arc électrique entre au moins trois électrodes (Ei) et ladite feuille métallique au contact d'au moins trois prises de masses (PMi),

dans lequel le plan de chaque prise de masse (PMi) est positionnée à une distance $(e_i)$ comprise entre - 5 mm et + 25 mm par rapport au plan de chaque électrode (Ei) correspondante, le sens positif étant le sens de déplacement relatif de la feuille métallique par rapport aux électrodes (Ei).

**2.** Procédé selon la revendication 1, **caractérisé en ce que** la distance (ei) plan électrode/plan prise de masse est comprise entre 0 mm et + 20 mm.

**3.** Procédé selon l'une des revendications 1 ou 2, **caractérisé en ce que** la distance (ei) plan électrode/plan prise de masse est comprise entre + 7 mm et + 15 mm.

**4.** Procédé selon l'une des revendications 1 à 3, **caractérisé en ce qu'**on règle les écartements entre les électrodes afin d'assurer l'accrochage du pied de chaque arc électrique sur du métal solidifié.

**5.** Procédé selon l'une des revendications 1 à 4, **caractérisé en ce que** l'écartement entre une électrode $(E_1)$ et une électrode $(E_2)$ successives est inférieur ou égale à l'écartement entre une électrode (E2) et une électrode $(E_3)$ successives.

**6.** Procédé selon l'une des revendications 1 à 5, **caractérisé en ce que** l'intensité du courant parcourant une électrode est supérieure ou égale à 50 A et, de préférence, supérieure ou égale à 100 A.

**7.** Procédé selon l'une des revendications 1 à 6, **caractérisé en ce que** la vitesse relative de déplacement de la feuille est supérieure ou égale à 2 m.s$^{-1}$, de préférence supérieure ou égale à 5 m.s$^{-1}$.

**8.** Procédé selon l'une des revendications 1 à 7, **caractérisé en ce qu'**il comporte, en outre, une étape de chanfreinage d'au moins une partie des deux bords longitudinaux de la feuille métallique, de sorte de présenter avant soudage, un chanfrein en "V" ayant un angle d'ouverture $(\alpha)$ compris entre environ 30° et environ 120°, de préférence entre environ 60° et environ 90°.

**9.** Procédé selon la revendication 8, **caractérisé en ce que** ledit chanfrein a une hauteur comprise entre environ 1/3 et environ 2/3 de l'épaisseur de la feuille métallique.

**10.** Procédé selon l'une des revendications 1 à 9, **caractérisé en ce que** la feuille métallique est remplie d'au moins un élément de remplissage, préalablement à son soudage.

**11.** Procédé selon l'une des revendications 1 à 10, **caractérisé en ce qu'**on réalise une soudure incomplète des deux bords longitudinaux de ladite feuille métallique, l'un avec l'autre, par fusion partielle d'environ 20% à environ 80% de l'épaisseur de ladite feuille au niveau desdits bords et, de préférence, d'environ 40% à environ 60%.

**12.** Procédé selon la revendication 11, **caractérisé en ce qu'**on réalise, en outre, une soudure de forge desdits bords, l'un avec l'autre, par application d'une pression mécanique latérale sur au moins une partie de la paroi externe de la feuille, de sorte d'obtenir une soudure sensiblement complète selon toute l'épaisseur.

**13.** Procédé selon l'une des revendications 1 à 12, **caractérisé en ce qu'**après soudage, le tube subit au moins une étape de tréfilage, de laminage et/ou recuit de recristallisation.

**14.** Dispositif de fabrication d'un tube métallique à partir d'une feuille métallique ayant deux bords longitudinaux sensiblement rectilignes et parallèles, comportant des moyens de soudage à l'arc électrique pour souder, l'un avec l'autre, les deux bords longitudinaux de la feuille métallique mettant en oeuvre au moins trois électrodes (Ei) et au moins trois prises de masses (PMi) correspondantes, chaque prise de masse (PMi) étant positionnée à une distance $(e_i)$ comprise entre - 5 mm et + 25 mm par rapport à chaque électrode (Ei), le sens positif étant le sens de déplacement relatif de la feuille métallique par rapport aux électrodes (Ei).

**EP 0 896 853 B1**

**Claims**

1. Process for manufacturing a metal pipe formed from a metal sheet having two substantially straight and parallel longitudinal edges, in which process the two longitudinal edges of the metal sheet are welded together by means of a welding process using at least one electric arc between at least three electrodes (Ei) and said metal sheet in contact with at least three earth connections (PMi);

in which the plane of each earth connection (PMi) is positioned at a distance (ei) of between -5 mm and +25 mm from the plane of each corresponding electrode (Ei), the positive direction being the direction of relative displacement of the metal sheet with respect to the electrodes (Ei).

2. Process according to Claim 1, **characterized in that** the electrode plane/earth connection plane distance (ei) is between 0 mm and +20 mm.

3. Process according to either of Claims 1 and 2, **characterized in that** the electrode plane/earth connection plane distance (ei) is between +7 mm and +15 mm.

4. Process according to one of Claims 1 to 3, **characterized in that** the separations between the electrodes are adjusted so as to ensure that the root of each electric arc attaches to solidified metal.

5. Process according to one of Claims 1 to 4, **characterized in that** the separation between successive electrodes (E1 and E2) is less than or equal to the separation between successive electrodes (E2 and E3).

6. Process according to one of Claims 1 to 5, **characterized in that** the intensity of the current flowing through an electrode is greater than or equal to 50 A and preferably greater than or equal to 100 A.

7. Process according to one of Claims 1 to 6, **characterized in that** the relative speed of travel of the sheet is greater than or equal to 2 m.s$^{-1}$, preferably greater than or equal to 5 m.s$^{-1}$.

8. Process according to one of Claims 1 to 7, **characterized in that** it furthermore includes a step of bevelling at least one portion of the two longitudinal edges of the metal sheet so as to have, before welding, a V-shaped groove with a cone angle ($\alpha$) of between about 30° and about 120°, preferably between 60° and about 90°.

9. Process according to Claim 8, **characterized in that** the said groove has a depth of between 1/3 and about 2/3 of the thickness of the metal sheet.

10. Process according to one of Claims 1 to 9, **characterized in that**, before it is welded, the metal sheet is filled with at least one filling element.

11. Process according to one of Claims 1 to 10, **characterized in that** the two longitudinal edges of the said metal sheet are incompletely welded together by partial melting of about 20% to about 80%, preferably about 40% to about 60%, of the thickness of the said sheet at the said edges.

12. Process according to Claim 11, **characterized in that** the said edges are furthermore forge-welded together by applying lateral mechanical pressure on at least part of the outer wall of the sheet so as to obtain a substantially complete weld throughout the thickness.

13. Process according to one of Claims 1 to 12, **characterized in that**, after welding, the pipe undergoes at least one drawing, rolling and/or recrystallization annealing step.

14. Apparatus for manufacturing a metal pipe from a metal sheet having two substantially straight and parallel longitudinal edges,. which includes electric arc welding means for welding the two longitudinal edges of the metal sheet together using at least three electrodes (Ei) and at least three corresponding earth connections (PMi), each earth connection (PMi) being positioned at a distance (ei) of between -5 mm and +25 mm with respect to each electrode (Ei), the positive direction being the direction of relative displacement of the metal sheet with respect to the electrodes (Ei).

14

**Patentansprüche**

1. Verfahren zur Herstellung eines geformten Metallrohrs aus einem Metallblech mit zwei im Wesentlichen geradlinigen und parallelen Längsrändern, bei dem die zwei Längsränder des Metallsblechs mittels eines Schweißverfahrens miteinander verschweißt werden, das einen elektrischen Lichtbogen zwischen zumindest drei Elektroden (Ei) und dem Metallblech im Kontakt mit zumindest drei Masseanschlüssen (PMi) einsetzt,

   bei dem die Ebene jedes Masseanschlusses (PMi) in einem Abstand ($e_i$) zwischen - 5 mm und + 25 mm relativ zu der Ebene jeder zugehörigen Elektrode (Ei) positioniert ist, wobei das positive Vorzeichen die relative Bewegungsrichtung des Metallblechs relativ zu den Elektroden (Ei) ist.

2. Verfahren nach Anspruch 1, **dadurch gekennzeichnet, dass** der Abstand (ei) Elektrodenebene/Masseanschlussebene zwischen 0 mm und + 20 mm liegt.

3. Verfahren nach einem der Ansprüche 1 oder 2, **dadurch gekennzeichnet, dass** der Abstand (ei) Elektrodenebene/Masseanschlussebene zwischen + 7 mm und + 15 mm liegt.

4. Verfahren nach einem der Ansprüche 1 bis 3, **dadurch gekennzeichnet, dass** die Entfernungen zwischen den Elektroden geregelt werden, um das Ankoppeln des Fußes jedes elektrischen Lichtbogens auf festem Metall zu gewährleisten.

5. Verfahren nach einem der Ansprüche 1 bis 4, **dadurch gekennzeichnet, dass** die Entfernung zwischen einer Elektrode ($E_1$) und einer nachfolgenden Elektrode ($E_2$) kleiner oder gleich der Entfernung zwischen einer Elektrode (E2) und einer nachfolgenden Elektrode ($E_3$) ist.

6. Verfahren nach einem der Ansprüche 1 bis 5, **dadurch gekennzeichnet, dass** die Stärke des eine Elektrode durchlaufenden Stroms größer oder gleich 50A und vorzugsweise größer oder gleich 100A ist.

7. Verfahren nach einem der Ansprüche 1 bis 6, **dadurch gekennzeichnet, dass** die relative Bewegungsgeschwindigkeit des Blechs größer oder gleich 2 m.s$^{-1}$, und vorzugsweise größer oder gleich 5 m.s$^{-1}$ ist.

8. Verfahren nach einem der Ansprüche 1 bis 7, **dadurch gekennzeichnet, dass** es zudem ein Schritt des Anfasens zumindest eines Teils der beiden Längsränder des Metallblechs umfasst, so dass sie vor dem Schweißen eine V-förmige Fase mit einem Öffnungswinkel ($\alpha$) aufweisen, der zwischen etwa 30° und etwa 120° und vorzugsweise zwischen etwa 60° und etwa 90° liegt.

9. Verfahren nach Anspruch 8, **dadurch gekennzeichnet, dass** die Fase eine Höhe hat, die zwischen etwa 1/3 und 2/3 der Dicke des Metallblechs liegt.

10. Verfahren nach einem der Ansprüche 1 bis 9, **dadurch gekennzeichnet, dass** das Metallblech vor seiner Schweißung mit zumindest einem Füllelement gefüllt wird.

11. Verfahren nach einem der Ansprüche 1 bis 10, **dadurch gekennzeichnet, dass** durch teilweises Verschmelzen von etwa 20% bis 80% der Dicke des Blechs auf Höhe der Ränder und vorzugsweise etwa 40% bis etwa 60% eine unvollständige Verschweißung der Längsränder des Metallblechs miteinander ausgeführt wird.

12. Verfahren nach Anspruch 11, **dadurch gekennzeichnet, dass** zudem eine Schmiedeschweißung der Ränder miteinander durch Anlegen eines seitlichen mechanischen Drucks auf zumindest einen Teil der Außenwand des Blatts durchgeführt wird, so dass eine im Wesentlichen komplette Schweißung auf der ganzen Dicke erhalten wird.

13. Verfahren nach einem der Ansprüche 1 bis 12, **dadurch gekennzeichnet, dass** nach dem Schweißen das Rohr zumindest einem Schritt des Drahtziehens, des Walzens und/oder der einer Erwärmung zur Rekristallisation unterzogen wird.

14. Vorrichtung zur Herstellung eines geformten Metallrohrs aus einem Metallblech mit zwei im Wesentlichen geradlinigen und parallelen Längsrändern, mit Mitteln zum elektrischen Lichtbogenschweißen, um die zwei Längsränder des Metallblechs miteinander zu verschweißen, wobei zumindest drei Elektroden (Ei) und zumindest drei zugehörige Masseanschlüssen (PMi) einsetzt werden, wobei jeder Masseanschluß (PMi) in einem Abstand ($e_i$) zwischen - 5 mm und + 25 mm relativ zu jeder Elektrode (Ei) positioniert sind, wobei das positive Vorzeichen die relative Bewegungsrichtung des Metallblechs relativ zu den Elektroden (Ei) ist.

FIG 1

FIG 2

FIG 3

FIG 4

FIG 5

FIG 6

Figure 7

Figure 8

Figure 13

EP 0 896 853 B1

Section XY

FIG 9a

FIG 9b

Section XZ

Section XY

FIG 10a

FIG 10b

Section XZ

20

FIG 11

FIG 12